(19) Europäisches Patentamt
European Patent Office
Office européen des brevets

(11) **EP 4 609 761 A1**

(12) **EUROPEAN PATENT APPLICATION**

(43) Date of publication:
**03.09.2025 Bulletin 2025/36**

(21) Application number: **25158505.5**

(22) Date of filing: **18.02.2025**

(51) International Patent Classification (IPC):
*A47J 27/00* (2006.01)    *A47J 36/06* (2006.01)
*A47J 36/32* (2006.01)

(52) Cooperative Patent Classification (CPC):
**A47J 36/06; A47J 27/002; A47J 36/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024  US 202418591535**

(71) Applicant: **Whirlpool Corporation**
**Benton Harbor, MI 49022 (US)**

(72) Inventors:
• **Bressan, Elisabetta**
  **Benton Harbor, 49022 (US)**

• **Gallivanoni, Andrea**
  **Benton Harbor, 49022 (US)**
• **Ghibaudi, Marco**
  **Benton Harbor, 49022 (US)**
• **Masi, Daniele**
  **Benton Harbor, 49022 (US)**
• **Minazzi, Gian Marco**
  **Benton Harbor, 49022 (US)**
• **Pacioni, Annalisa**
  **Benton Harbor, 49022 (US)**
• **Rinaldi, Francesca**
  **Benton Harbor, 49022 (US)**

(74) Representative: **PGA S.p.A., Milano, Succursale di Lugano**
**Via Castagnola, 21c**
**6900 Lugano (CH)**

(54) **COOKING VESSEL**

(57)     A cooking vessel (20, 120, 220) has a cooking body (22) and a lid (24, 124, 224). The cooking body (22) defines a cooking chamber (26). The lid (24, 124, 224) is removably couplable to the cooking body (22). The lid (24, 124, 224) has a lid body (32, 132, 232) and a liquid reservoir (36, 136, 236). The liquid reservoir (36, 136, 236) is provided within the lid body (32, 132, 232). The at least one sensor (42, 142, 242) is configured to measure at least one of a humidity or a temperature of the cooking chamber (26).

FIG. 2

EP 4 609 761 A1

## Description

### TECHNICAL FIELD

The description generally relates to a cooking vessel, and more specifically to a cooking vessel suitable for use with a cooking appliance.

### BACKGROUND

Cooking appliances, such as cooktops, ranges, etc., have cook surfaces with hobs that generate heat for cooking or warming food items in a cooking vessel having a cooking chamber. Traditional cooking appliances provide thermal energy to the hob, such as by a gas fuel or electricity, which is conductively transferred to a cooking vessel placed thereon. In other examples, induction cooking appliances provide energy directly to the cooking vessel by way of electromagnetic induction using a variable-current coil and a suitable metallic cooking vessel. During operation, such induction cooking appliances can have much cooler surface temperatures compared to traditional cooking appliances with conductive hobs or burners.

### BRIEF SUMMARY

In one aspect, the disclosure relates to a cooking vessel comprising a cooking body defining a cooking chamber, a lid removably couplable to the cooking body, the lid having a lid body extending between an inner surface confronting the cooking chamber, and an outer surface, the lid body having a centerline axis extending between the inner surface and the outer surface, and a liquid reservoir provided within the lid body, and at least one sensor configured to measure at least one of a humidity or a temperature of the cooking chamber wherein a liquid within the liquid reservoir is selectively supplied to the cooking chamber based on at least one of the measured humidity of temperature of the cooking chamber.

### BRIEF DESCRIPTION OF THE DRAWINGS

In the drawings:

FIG. 1 is a perspective schematic view of a cooking appliance and a cooking vessel having a cooking body and a lid, the cooking body defining a cooking chamber, in accordance with various aspects described herein.
FIG. 2 is a schematic cross-sectional view of the cooking appliance and the cooking vessel of FIG. 1, further illustrating at least one sensor provided within the lid, the lid having an inner surface confronting the cooking chamber, in accordance with various aspects described herein.
FIG. 3 is a schematic view of the inner surface of the lid as seen from sight-line **III-III** of FIG. 2, further illustrating a set of outlets provided along the inner surface, in accordance with various aspects described herein.
FIG. 4 is a schematic view of a lid of an exemplary cooking vessel suitable for use as the cooking vessel of FIG. 1, further illustrating a set of outlets provided along the inner surface, in accordance with various aspects described herein.
FIG. 5 is a schematic cross-sectional side view of a lid of an exemplary cooking vessel suitable for use as the cooking vessel of FIG. 1, further illustrating a distribution duct provided within the lid.

### DETAILED DESCRIPTION

A cooking vessel includes a cooking body defining a cooking chamber. The cooking vessel includes a lid. The lid is removably couplable to the cooking body. The lid provides selective access to the cooking chamber. The cooking vessel includes a sensor that is configured to measure at least one of a humidity or a temperature of contents (e.g., food items) of the cooking chamber. The cooking vessel is suitable for use with a cooking appliance having at least one heating zone. The at least one heating zone includes a heating element that generates a heat and transfers thermal energy to the cooking chamber to heat the contents of the cooking chamber. As used herein, the cooking appliance is any suitable device or element that is configured to produce a heat that is at least partially transferable to the cooking chamber. At least one of a liquid can be dispensed into the cooking chamber, the temperature of the heating zone can be changed, or a combination thereof can be done based on a measurement from the sensor.

The cooking appliance, as described herein, can be an induction cooking appliance. It will be appreciated, however, that the cooking vessel is suitable for use within any suitable cooking appliance such as, but not limited to, an oven, a microwave, a stovetop range, an induction stovetop, a fire (e.g., a camp fire), a hot pad, a portable stove, a grill, a smoker, or the like.

Features, advantages, and aspects of the present disclosure are set forth or apparent from a consideration of the following detailed description, drawings, and claims. Moreover, the following detailed description is exemplary and intended to provide explanation without limiting the scope of the disclosure as claimed.

As used herein, the terms "first," "second," "third," "fourth," or the like can be used interchangeably to distinguish one component from another and are not intended to signify location or importance of the individual components. In addition, the singular forms "a," "an," and "the" include plural references unless the context clearly dictates otherwise.

Also, as used herein, while sensors can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller module or processor, and the controller module or processor can perform processing on the value to determine a representative value or an electrical characteristic representative of said value.

Additionally, as used herein, a "controller" or "controller module" can include a component configured or adapted to provide instruction, control, operation, or any form of communication for operable components to effect the operation thereof. A controller module can include any known processor, microcontroller, or logic device, including, but not limited to: field programmable gate arrays (FPGA), an application specific integrated circuit (ASIC), a proportional controller (P), a proportional integral controller (PI), a proportional derivative controller (PD), a proportional integral derivative controller (PID controller), a hardware-accelerated logic controller (e.g. for encoding, decoding, transcoding, etc.), or the like, or a combination thereof. Non-limiting examples of a controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types.

Such a controller module as described herein may also compare a first value with a second value and may operate or control operations of additional components based on the satisfaction of that comparison. As used herein, the term "satisfies" or "satisfaction" of a comparison between a first value and a second value will refer to a determination of whether the first value exceeds the second value, or does not exceed the second value, or is equal to the second value, such that the comparison is "true" when satisfied. In addition, as used herein, the term "satisfies" or "satisfaction" of a comparison between a first value and a value range refers to a determination that the first value is within the value range, such that the comparison is "true" when satisfied. It will be understood that such a determination may easily be altered to be satisfied by a positive/negative comparison or a true/false comparison. Example comparisons can include comparing a sensed or measured value to a threshold value, or to a threshold value range. For example, when a sensed, measured, or provided value is compared with another value or range, including a stored or predetermined value or range, the satisfaction of that comparison can result in actions, functions, or operations controllable by the controller module.

Such a controller module as described herein can further include a data storage component accessible by the processor, including memory, whether transient, non-transient, volatile, or non-volatile memory. Machine-executable instructions, associated data structures, and program modules represent examples of program code for executing methods disclosed herein. Machine-executable instructions can include, for example, instructions and data, which cause a general purpose computer, special purpose computer, or special purpose processing machine to perform a certain function or group of functions.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

"Hydraulic diameter" (Dh) as used herein is in reference to a hydraulic diameter of one or more cavities or openings (e.g., an outlet of a fuel nozzle) of a finished (e.g., manufactured) fuel nozzle. Hydraulic diameter is a commonly used term when handling flow in non-circular tubes and channels. When the cross-section is uniform along the tube or channel length, it is defined as $D_H = \frac{4a}{p}$ where "a" is the cross-sectional area of the flow and "p" is the wetted perimeter of the cross-section. The hydraulic diameter can further be indirectly related to the Reynolds number of the fluid flow. As such, the hydraulic diameter can be used to at least partially quantify the flow of fluid through an area or pipe. It will be appreciated that the specific calculations for the hydraulic diameter are known and referenced herein without direct reference.

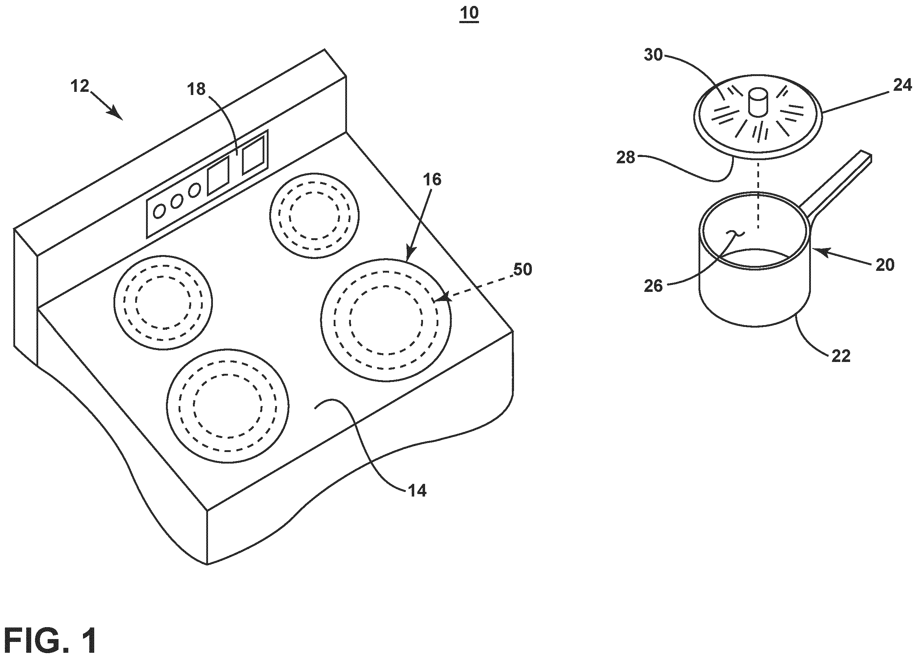

FIG. 1 is a schematic presentation of a cooking system 10 including a cooking appliance 12 and a cooking vessel 20. As illustrated, the cooking appliance 12 is an induction cooking appliance. However, it will be appreciated that the cooking appliance 12 is any suitable cooking appliance. The cooking appliance 12 includes a cook surface 14 including at least one heating zone 16. The heating zone 16 is any suitable area along, within or near the cooking appliance 12 where the cooking vessel 20 can be placed such that a heat from the cooking appliance 12 is transferrable to the cooking vessel 20. While illustrated as being along the cooking appliance 12, the heating zone 16 can be an interior portion of the cooking appliance 12 or an area near the cooking appliance 12. As a non-limiting example, the cooking appliance 12 can be an oven having an interior cooking chamber that defines the heating zone 16. While a single heating zone 16 is illustrated in FIG. 1, the cooking appliance 12 can include multiple heating zones 16 accommodating multiple cooking vessels 20.

The cooking appliance 12 includes a heating element 50. The heating element 50 is configured to generate heat within the cooking vessel 20 when the cooking vessel 20 is positioned over the heating zone 16.

The cooking appliance 12 includes a user interface 18. The user interface 18 is any suitable interface that is used by a user to control operation of the cooking appliance 12. The control of the cooking appliance 12 can include, for example, setting a cooking mode, setting a cooking temperature, or setting a timer, or the like. As a non-limiting example, the user interface 18 can include any suitable interface elements such as buttons, knobs, toggles, display screens, touch screens, light sources, or audio sources, in some examples. As shown, the user interface 18 is located on the cooking appliance 12 though this need not be the case. In some implementations, the user interface 18 can be located on a separate device, such as a mobile device, a tablet, or a central hub in some non-limiting examples. It is also contemplated that the user interface 18 can include user-interactive elements on the cooking appliance 12 and additional user-interactive elements on a separate device.

The cooking vessel 20 includes a cooking body 22 and a lid 24. The cooking body 22 defines a cooking chamber 26. The lid 24 includes an inner surface 28 and an outer surface 30. The lid 24 is removably couplable to the cooking body 22. The lid 24 provides selective access to the cooking chamber 26. When coupled to the cooking body 22, at least a portion of the inner surface 28 extends across a respective portion of the cooking chamber 26. The cooking vessel 20 is any suitable cooking vessel including a cooking chamber and lid 24. As a non-limiting example, the cooking vessel 20 is, but is not limited to, a pot, a pan, a Dutch oven, a slow cooker, a pressure cooker, a skillet, or the like.

While described in terms of the cooking vessel 20 and the cooking appliance 12 being separate, it will be appreciated that the cooking appliance 12 can be integrally formed with the cooking vessel 20. As a non-limiting example, the cooking appliance 12 can be a slow cooker including an integrally formed pot defining the cooking chamber 26. The lid 24 can be a lid to the slow cooker.

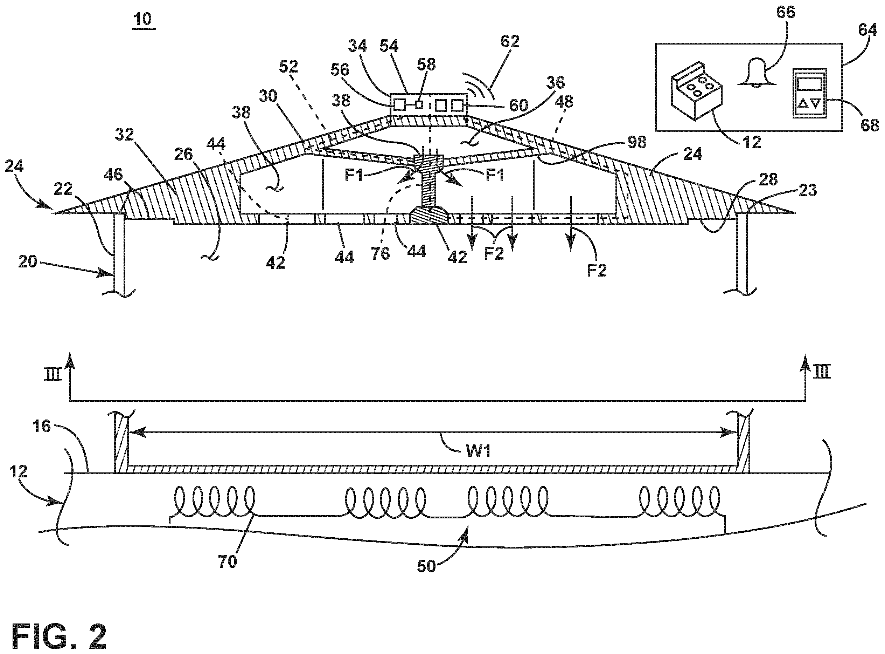

FIG. 2 is a schematic side cross-sectional view of the cooking system 10 of FIG. 1 with the cooking vessel 20 provided along the heating zone 16. The cooking appliance 12 includes the heating element 50. The heating element 50 can include a set of coils 70. The set of coils 70 produce a heat that is transferrable to the cooking vessel 20 within the heating zone 16 when an electric current is supplied the set of coils 70. The heating element 50 can include any suitable component or device configured to produce a heat that is transferrable to the cooking vessel 20 within the heating zone 16.

The lid 24 includes a lid body 32 that extends between the inner surface 28 and the outer surface 30. The lid body 32 includes a centerline axis 76 extending between the inner surface 28 and the outer surface 30.

The cooking body 22 terminates at a top end 23. The cooking body 22 extends a first radial width (W1) between radially opposing sides of the top end 23, with respect to the centerline axis 76, when the lid 24 is coupled to the cooking body 22. The lid 24 is adapted to fit two or more cooking bodies 22 having varying first radial widths (W1). As a non-limiting example, the lid 24 can include a series of steps 46 that are sized to fit the two or more cooking bodies 22. The series of steps 46 are provided along the inner surface 28.

The lid body 32 includes a handle 34. As used herein, the handle 34 is any suitable feature, component, formation, or device that a user of the cooking vessel 20 can utilize to remove the lid 24 from the cooking body 22. The handle 34 can be provided along any suitable portion of the lid body 32 that is accessible to a user when the lid 24 is coupled to the cooking body 22. As a non-limiting example, the handle 34 is provided along the upper surface 30.

The lid 24 can include a liquid reservoir 36 provided within the lid body 32. The liquid reservoir 36 is any reservoir, cavity, or chamber within the lid body 32 that is configured to hold a volume of liquid. The liquid can be, but is not limited to, water, wine, broth, stock, or the like. An inlet (not illustrated) can be formed along the lid body 32 to provide access to the liquid reservoir 36. Put another way, the lid body 32 can include an inlet to the liquid reservoir 36 that allows for liquid to be added to the liquid reservoir 36. As a non-limiting example, the handle 34 can be removably coupled to the lid body 32 and act as a cork or cover for the inlet of the liquid reservoir 36. As such, the handle 34 can be selectively removable from the lid body 32 to provide for access to the liquid reservoir.

The liquid reservoir 36 can have any suitable shape or volume. As a non-limiting example, the volume of the liquid reservoir 36 is selected based on a desired volume of liquid that the lid 24 can hold.

The lid 24 can include a distribution cavity 40 provided within the lid body 32. The lid body 32 can define a separating wall 98 that separates the liquid reservoir 36 and the distribution cavity 40. The distribution cavity 40 is fluidly coupled to the cooking chamber 26 through a set of outlets 44. The set of outlets 44 are formed along the inner surface 28. The distribution cavity 40 is configured to distribute a liquid from the liquid reservoir 36 to the set of outlets 44. Each outlet of the set of outlets 44 includes an outlet centerline axis 45 extending from the distribution cavity 40 and to the inner surface 28. The outlet centerline axis 45 is parallel to or non-parallel to the centerline axis 76. Each outlet of the set of outlets 44 includes the same or differing construction. As a non-limiting example, at least two outlets can include non-parallel outlet centerline axis 45.

While illustrated as two separate cavities or chambers, it will be appreciated that the liquid reservoir 36 and the distribution cavity 40 can be a single cavity or chamber formed within the lid body 32.

The lid 24 can include a valve 38 selectively fluidly coupling the liquid reservoir 36 to the distribution cavity 40. The valve 38 is any suitable value such as, but not limited to, an electrovalve, a pressure valve, a diaphragm valve, or the like.

The lid 24 includes a sensor 42. The sensor 42 is any suitable sensor configured to measure at least one of a temperature, a humidity, or a combination thereof of the contents of the cooking chamber 26 or of the cooking chamber 26 itself. The sensor 42 can be provided along a portion of the lid 24 confronting the cooking chamber 26. As a non-limiting example, the sensor 42 can be provided along a portion of the inner surface 28 that confronts the cooking chamber 26. Alternatively, the sensor 42 can be provided along any suitable portion of the lid 24, the cooking body 22, or a combination thereof where the at least on sensor 42 can accurately measure at least one of the temperature, the humidity, or a combination thereof of the contents of the cooking chamber 26 or of the cooking chamber 26 itself. While only a single sensor 42 is illustrated, it will be appreciated that the cooking vessel 20 can include any number of one or more sensors.

The lid 24 includes a controller module 54 formed along or provided within the lid body 32, or otherwise communicatively coupled to a respective portion of the lid 24. As a non-limiting example, the controller module 54 can be provided within the handle 34. The controller module 54 includes a processor 56, a memory 58, and a transceiver 60. The controller module 54 or processor 56 can be operably or communicatively coupled to various portions of the system described herein, such as, but not limited to, the valve 38, the sensor 42, or a combination thereof. The sensor 42 and the valve 38 can be communicatively coupled to the controller module 54 through a first communication line 48 and a second communication line 52, respectively. The first communication line 48 and the second communication line 52 can be at least one of a physical lines formed within the lid body 32, wireless communications between the sensor 42 and the valve 38 and the controller module 54, or a combination thereof. The memory 58 can include random access memory (RAM), read-only memory (ROM), flash memory, or one or more different types of portable electronic memory, such as discs, DVDs, CD-ROMs, etc., or any suitable combination of these types of memory. The controller module 54 or processor 56 can further be configured to run any suitable programs. Non-limiting embodiments of the disclosure can be included wherein, for example, the controller module 54 or processor 56 can also be connected with other controllers, processors, or systems of the cooking system 10, or can be included as part of or a subcomponent of another controller, processor, or system of the cooking system 10.

The transceiver 60 is configured to produce and/or receive a signal 62. The signal 62 includes data representative of the function of the controller module 54. As a non-limiting example, the signal 62 can include data representative of a measurement from the sensor 42. As a non-limiting example, the signal 62 can include a command to the controller module 54 to open or close the valve 38. The signal 62 can be at least one of sent to, receive from, or a combination thereof a set of external components 64. The set of external components 64 are any suitable device or component that is external the cooking vessel 20. As a non-limiting example, the set of external components 64 can include at least one of the cooking appliance 12, an alarm 66, an electronic device 68, or a combination thereof. The alarm 66 can be at least one of a visual alarm, acoustic alarm, haptic alarm, or the like. The electronic device 68 can be at least one of a computer, a tablet, a palm pilot, a mobile phone, a landline, or the like.

While illustrated as being provided along the lid 24, the controller module 54 can be provided external the cooking vessel 20. As a non-limiting example, the controller module 54 can be a controller module of the cooking appliance 12. As such, the valve 38 and the sensor 42 can be wirelessly coupled to the controller module 54.

The lid body 32 can have any suitable cross-sectional area when viewed along a plane extending along the centerline axis 76. The cross-sectional area of the lid body 32 can be, but is not limited to, circular, rectangular, ovular, triangular, or the like.

During operation, food items are placed within the cooking chamber 26. The cooking vessel 20 is positioned within, along, or near the heating zone 16. The heating element 50 is turned on and a heat from the heating element 50 is transferred to the food items within the cooking chamber 26. The sensor 42 measures at least one of a temperature, a humidity, or a combination thereof of the cooking chamber 26. The measurement of at least one of a temperature, a humidity, or a combination thereof of the cooking chamber 26 can be used in a variety of ways. The measurement of at least one of a temperature, a humidity, or a combination thereof of the cooking chamber 26, via the sensor 42, will hereinafter be referred to as "the sensed parameters of the cooking chamber 26".

The controller module 54 can determine through the sensed parameters of the cooking chamber 26 if a liquid needs to be added to the cooking chamber 26. As a non-limiting example, if the sensed parameters of the cooking chamber 26 is indicative of a low humidity within the cooking chamber 26, at least a portion of the liquid from the liquid reservoir 36 can be automatically released, via a command sent to the valve 38 via the controller module 54, as a first flow of liquid (F1). The first flow of liquid (F1) flows into the distribution cavity 40, where the first flow of liquid (F1) is distributed to the set of outlets 44 and into the cooking chamber 26 as a second flow of liquid (F2). The second flow of liquid (F2), which is ultimately fed to the cooking chamber 26, is used to increase the moistness of the food items within the cooking chamber 26 and the humidity of the cooking chamber 26 itself.

The sensed parameters of the cooking chamber 26 can be used to determine a doneness of the food items within the cooking chamber 26, or otherwise be used to determine how far along in the cooking process the food items are. As a non-limiting example, the doneness of the food items can be determined as a function of a time, humidity of the cooking chamber 26, temperature of the cooking chamber 26, a type of food that the food items are, a desired doneness of the food items, or a combination thereof.

Put another way, the sensed parameters of the cooking chamber 26 will be different based on the food item within the cooking chamber 26. As a non-limiting example, a moister food item such as a soup or a stew will create a higher humidity within the cooking chamber 26, while a drier food item such as a steak will create a lower humidity within the cooking chamber 26 in comparison with the moister food item. Both of these food items, however, have a humidity and/or temperature threshold that, when measured by the sensor 42, indicates that the respective food item needs additional moisture or otherwise that the temperate needs to be adjusted. As such, the controller module 54 can include within the memory 58 or a memory accessible to the controller module 54 a library of food items and what the corresponding sensed parameters of the cooking chamber 26 mean for a given food item. It is contemplated that that the library of food items can be preset or loaded onto the memory 58 or the memory accessible to the controller module 54. It is contemplated that the food library can be based on user preference that are set by a preference of a user of the cooking vessel 20. As a non-limiting example, a user of the cooking vessel 20 may desire a well-done steak as opposed to a rare steak. It is contemplated that a well-done steak will create a higher temperature and a lower humidity when fully cooked, while a rare steak will be the opposite. As such, the controller module 54 can utilize the sensed parameters of the cooking chamber 26, and the stored library of food items that can be at least partially set by the user to determine the food items doneness based on the desire of the user. As a non-limiting example, the user may desire that an additional ingredient be added to the food item when a certain level of doneness is achieved. The user can upload this information to the food item library such that the controller module 54 can send an indication to the user when the additional ingredient is ready to be added based on the sensed parameters of the cooking chamber 26.

As a non-limiting example, the sensed parameters of the cooking chamber 26 can be used to ensure that the cooking body 22 does not dry out and subsequently burn the food item within the cooking chamber 26. If the sensed parameters of the cooking chamber 26 are indicative of the fact that the cooking body 22 is drying out, the liquid form within the liquid reservoir 36 can be automatically added to the cooking chamber 26, or an indication can be sent to the user of the cooking vessel 20 that additional moisture is required within the cooking chamber 26 or that the cooking body 22 is going to dry out. Conversely, the sensed parameters of the cooking chamber 26 can be used to determine if the cooking body 22 is too moist (e.g., there is too much liquid within the cooking body 22). As such, the controller module 54 can send an indication to the user of the cooking vessel 20 that at least some of the liquid within the cooking chamber 26 needs to be drained from the cooking chamber 26.

It is contemplated that based on the sensed parameters of the cooking chamber 26 the controller module 54 can automatically determine the doneness of the food items. The controller module 54 can send an update, via the signal 62, of the doneness of the food item to the set of external components 64. As a non-limiting example, the controller module 54 can send an indication to the set of external components 64 that the food items within the cooking chamber 26 are adequately cooked. As used herein, the term "adequately cooked" refers to the food items being fully cooked based on a preset threshold of the sensed parameters of the cooking chamber 26 for a given food item. The preset threshold can be preloaded on the memory 58, a memory accessible to the controller module 54 (e.g., the cloud), or be set by a user prior to the cooking of the food item.

As a non-limiting example, a user can set the preset threshold on the cooking appliance 12, the electronic device 68, or a combination thereof and the controller module 54 can receive a value of the preset threshold via the signal 62. As a non-limiting example, the controller module 54 can send an indication to the set of external components 64, via the signal 62, that the food items within the cooking chamber 26 are at a certain level of doneness or at a certain point in the cooking process of the food item. As a non-limiting example, the controller module 54 can send an indication to the set of external components 64, via the signal 62, that the food items are at a point within the cooking process where an additional ingredient or item needs to be added to the cooking chamber 26.

As a non-limiting example, the sensed parameters of the cooking chamber 26 can be used to adjust temperatures of the heating element 50 or heating zone 16. As a non-limiting example, the sensed parameters of the cooking chamber 26 can indicate that the temperature of the food item or the cooking chamber 26 is too high or too low. As such, the controller module 54 can send a command to or otherwise directly control, via the signal 62, the operation of the cooking appliance 12 and lower or raise, respectively, an amount of heat generated by the heating element 50. As a non-limiting example, the cooking vessel 20 can automatically turn off, via the signal 62, the heating element 50 when it is determined that the food item is fully cooked or nearing fully cooked.

The cooking vessel 20 allows for the automatic control of the cooking process of the food item within the cooking chamber 26. The automatic control, done via the controller module 54, ensures that the food item is not too moist or too dry and not overcooked or undercooked by at least one of adding moisture to the cooking chamber 26, adjusting a heat output of the heating element 50, or a combination thereof. The controller module 54 can receive the sensed parameters of the cooking chamber 26. The controller module 54 can utilize the sensed parameters of the cooking chamber 26 to at least one of determine a doneness of the food item, determine if the temperature within the cooking chamber 26 falls outside of an acceptable range (e.g., the cooking chamber 26 is too hot or too cold), or a combination thereof. The controller module 54 can automatically supply liquid from the liquid reservoir 36 to the cooking chamber 26 based on the received sensed parameters of the cooking chamber 26. The controller module 54 can automatically directly adjust or send a command to the cooking appliance 12 to adjust a heat output of the heating element 50 based on the received sensed parameters of the cooking chamber 26. The controller module 54 can automatically send a message to or otherwise indicate to a user of the cooking vessel 20 based on the received sensed parameters of the cooking chamber 26. The message or indication can be indicative of at least one of a doneness level of the food item, a need for an additional ingredient, a presence of a fire, or a combination thereof.

While the liquid reservoir 36 and the distribution cavity 40 are shown as being separate cavities formed within the lid body 32, it is contemplated that the liquid reservoir 36 and the distribution cavity 40 can be a single unitary cavity provided within the lid body 32. When formed as a single unitary body, the valve 38 can be configured to open or close at least a portion of the outlets of the set of outlets such that fluid can be selectively supplied from the unitary cavity and to the cooking chamber 26.

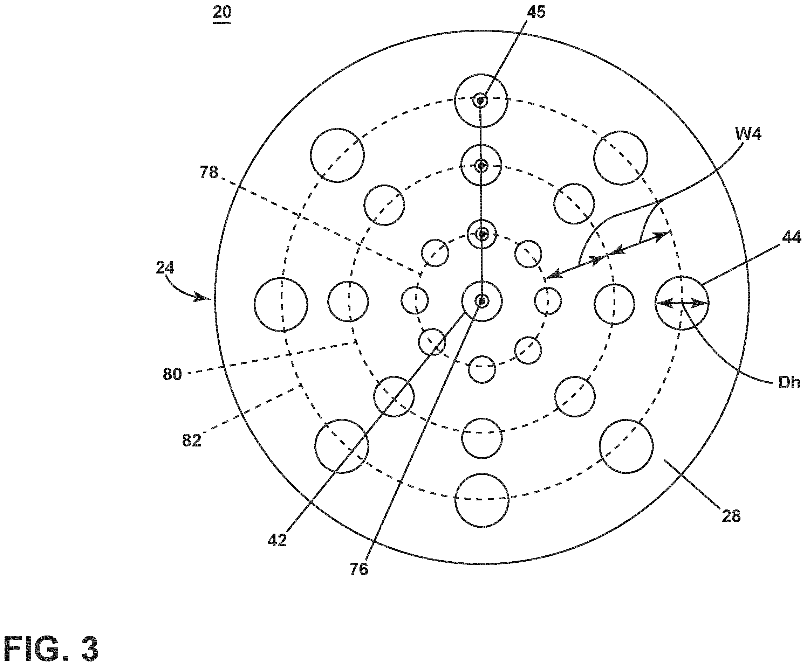

FIG. 3 is a schematic view of the inner surface 28 of the lid 24 as seen from sight-line III-III of FIG. 2. The inner surface 28 can have any suitable cross-sectional area when viewed along a plane perpendicular to the centerline axis 76 and intersecting the inner surface 28. The cross-sectional area of the inner surface 28 can be, but is not limited to, circular, rectangular, ovular, triangular, or the like. For purposes of illustration, the series of steps 46 (FIG. 2) are removed from the inner surface 28.

The set of outlets 44 can be arranged in circumferential rows about the centerline axis 76. The set of outlets 44 can be arranged in any number of one or more rows about the centerline axis 76. As a non-limiting example, the set of outlets 44 can be arranged along a first row 78, a second row 80 and a third row 82. Each row of the set of rows includes at least one outlet of the set of outlets 44 having an outlet centerline axis 45 at the inner surface 28 provided along the respective row of the set of rows. Two or more rows of the set of rows can be concentric or non-concentric with respect to each other.

Each row of the set of rows can include any number of one or more outlets of the set of outlet 44. As a non-limiting example, each row of the set of rows includes two or more outlets of the set of outlet 44. A total number of outlets of the set of outlets 44 provided along a respective row of the set of rows is equal or non-equal between rows.

Each outlet of the set of outlets 44 includes a hydraulic diameter (Dh) at the inner surface 28. The hydraulic diameter (Dh) is the same, different, or a combination thereof between each outlet of the set outlets 44. As a non-limiting example, a portion of the set of outlets 44 provided along the third row 82 can all be larger than a portion of the set of outlets 44 provided on the second row 80.

Each outlet of the set of outlets 44 has a respective cross-sectional area when viewed along a plane extending along the inner surface 28. The cross-sectional area can be any suitable shape such as, but not limited to, circular, rectangular, trapezoidal, triangular, hexagonal, ovular, or the like. The cross-sectional area between outlets of the set of outlets 44 are the same, different, or a combination thereof. The hydraulic diameter (Dh) varies or remains constant along the outlet centerline axis 45 between the inner surface 28 and the distribution cavity 40.

The set of rows can be any suitable shape. The set of rows can be provided along any suitable portion of the inner surface 28. As a non-limiting example, at least one row of the set of rows can include a respective centerpoint that corresponds to or is offset from the centerline axis 76 at the inner surface 28.

The set of rows can be radially spaced from one another a fourth radial distance (W4). The fourth radial distance (W4) is equal or non-equal between adjacent rows of the set of rows. The radial distance (W4) between a first row and a second row radially adjacent to the first row and either circumscribing or circumscribed by the first row can be non-equal along the circumferential extent of the first row and the second row.

It is contemplated that a positioning of, a size of, and a number of outlets of the set of outlets 44 along the set of rows is selected to ensure that the second flow of liquid (F2) is evenly distributed along the inner surface 28. As a non-limiting example, at least one of the size of the outlets, the number of outlets, or a combination thereof are used to discourage or encourage the second flow of liquid (F2) from flowing through a respective portion of the lid 24. As a non-limiting example, a few number of outlets of the set of outlets provided on a specific row, or otherwise smaller outers provided on the specific row are used to discourage the second flow of fluid (F2) from flowing through said outlets.

As a non-limiting example, the first flow of fluid (F1) of FIG. 2 is centrally (e.g., radially near the centerline axis 76) input into the distribution cavity 40. As such, when the first flow of liquid (F1) will come into contact with the set of outlets 44 provided along the first row 78 prior to coming into contact with the set of outlets 44 provided along the third row 82. By sizing the outlets of the set of outlets 44 smaller along the inner rows, or otherwise providing a fewer number of outlets of the set of outlets 44 along the inner rows, the first flow of fluid (F1) is discouraged from primarily flowing through the set of outlets 44 provided on the inner rows. Put another way, varying the size or number of outlets of the set of outlets 44 between the set of rows ensures that the first flow of liquid (F1) is evenly distributed within the distribution cavity 40, thus ensuring that the second flow of liquid (F2) is evenly distribute within the cooking chamber 26.

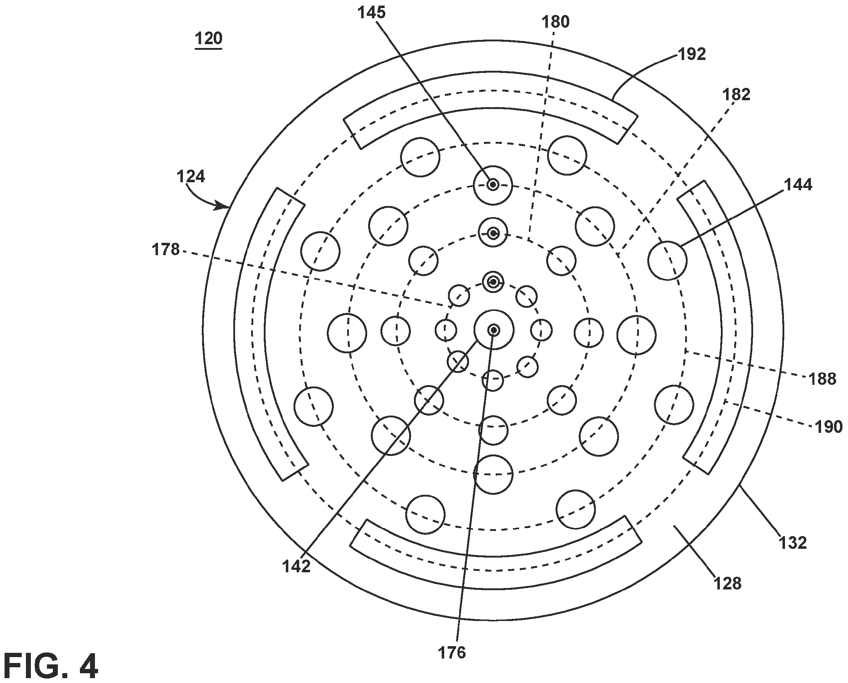

FIG. 4 is a schematic view of a lid 124 of an exemplary cooking vessel 120 suitable for use with the cooking vessel 20 of FIG. 1. The cooking vessel 120 is similar to the cooking vessel 20; therefore, like parts will be identified with like numeral increased to the 100 series, with it being understood that the description of the cooking vessel 20 applies to the cooking vessel 120 unless noted otherwise.

The lid 124 of the cooking vessel 120 includes a lid body 132. The lid body 132 extends between an inner surface 128 and an outer surface (not illustrated, e.g., the outer surface 30 of FIG. 2). The lid body 132 includes a centerline axis 176. A set of outlets 144 are provided along the inner surface 128. Each outlet of the set of outlets 144 includes an outlet centerline axis 145. The lid 124 is removed from a cooking body (e.g., the cooking body 22 of FIG. 1), however, it will be appreciated that the lid 124 can be couplable to any suitable cooking body. The lid 124 includes a sensor 142 provided along the inner surface 128. While not illustrated, the lid 124 can include any suitable additional element such as, but not limited to, a controller module (e.g., the controller module 54 of FIG. 2), a liquid reservoir (e.g., the liquid reservoir 36 of FIG. 2), a distribution cavity (e.g., the distribution cavity 40 of FIG. 2), a valve (e.g., the valve 38 of FIG. 2), a handle (e.g., the handle 34 of FIG. 2), a series of steps (e.g., the series of steps 46 of FIG. 2), or a combination thereof.

The lid 124 is similar to the lid 24 (FIG. 2) in that the lid 124 includes the set of outlets 144 provided along a set of rows. The set of rows of the lid 124, however, include a greater total number of rows than the set of rows of the lid 24. As a non-limiting example, the set of rows can include a first row 178, a second row 180, a third row 182, a fourth row 188 and a fifth row 190. The set of outlets 144 can differ between two or more rows of the set of rows.

As a non-limiting example the outlets of the set of outlets 144 provided on the third row 182 can be larger than the outlets of the set of outlets 144 provided along the first row 178. As a non-limiting example, the cross-sectional area of the outlets of the set of outlets 144 provided on the fifth row 190 can be larger than the cross-sectional area of the outlets of the set of outlets 144 provided on the first row 178, the second row 180, the third row 182 and the fourth row 188. As a non-limiting example, at least one outlet of the set of outlets 144 provided on the fourth row 188 can be formed as a non-circular channel 192, while at least one outlet of the set of outlets 144 provided on the first row 178, the second row 180, the third row 182 and the fourth row 188 can be a circular channel.

As a non-limiting example, at least one row of the set of rows can include outlets of the set of outlets 144 that are circumferentially offset from a radially nearest outlet of the set of outlets 144 provided on a radially adjacent row of the set of rows. As a non-limiting example, at least a portion of the outlets of the set of outlets 144 provided on the fourth row 188 can be circumferentially offset from at least a portion of the outlet of the set of outlets 144 provided on the third row 182.

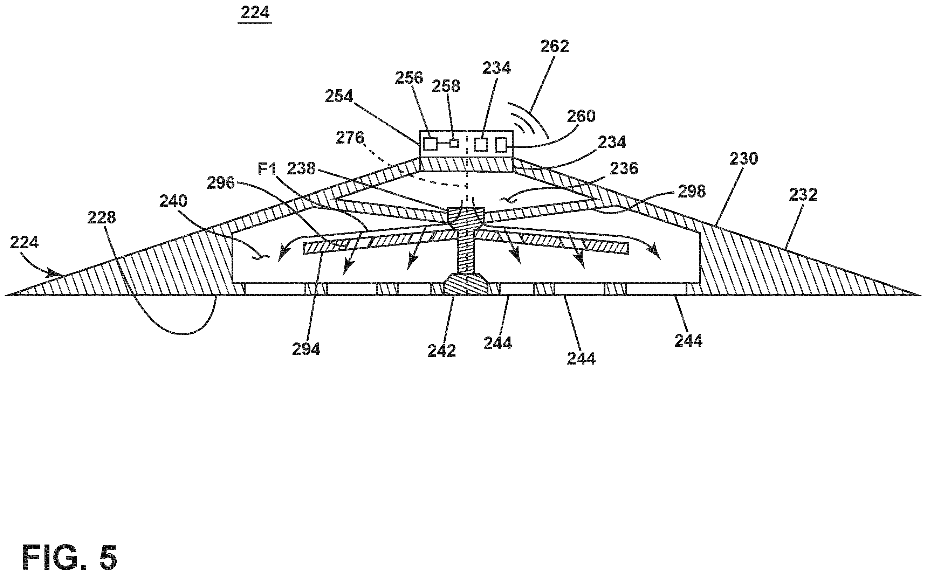

FIG. 5 is a schematic view of a lid 224 of an exemplary cooking vessel 220 suitable for use with the cooking vessel 20 of FIG. 2. The cooking vessel 220 is similar to the cooking vessel 20, 120 (FIG. 4); therefore, like parts will be identified with like numeral increased to the 200 series, with it being understood that the description of the cooking vessel 20, 120 applies to the cooking vessel 220 unless noted otherwise.

The lid 224 of the cooking vessel 220 includes a lid body 232. The lid body 232 extends between an inner surface 228 and an outer surface 230. The lid body 232 includes a centerline axis 276. A liquid reservoir 236 and a distribution cavity 240 can each be provided within the lid body 232. A separating wall 298 separates the liquid reservoir 236 and the distribution cavity 240. The lid 224 includes a handle 234. The lid 224 includes a valve 238 and a sensor 242 communicatively coupled to a controller module 254. The controller module 254 includes a processor 256, a memory 258 and a transceiver 260. The transceiver 260 is configured to produce and/or receive a signal 262. A set of outlets 244 are provided along the inner surface 228. The lid 224 is removed from a cooking body (e.g., the cooking body 22 of FIG. 2), however, it will be appreciated that the lid 224 can be couplable to any suitable cooking body.

The lid 224 is similar to the lid 24 (FIG. 1), 124 (FIG. 4) in that the lid 224 can be configured to distribute a first flow of liquid (F1) to the set of outlets 244. The lid 224, however, includes additional structure within the distribution cavity 240 to evenly distribute the first flow of liquid (F1) to the set of outlets 244. As a non-limiting example, the lid 224 can include a distribution duct 294. The distribution duct 294 can be a singular wall, a plurality of ducts or tubes, or a combination thereof formed within the distribution cavity 240 and being configured to distribute the first flow of liquid (F1) to the set of outlets 244. As a non-limiting example, the distribution duct 294 is a singular wall that extends circumferentially about and radially from the centerline axis 276. The distribution duct 294 can include a set of distribution holes 296 or channels configured to direct the first flow of liquid (F1) into the set of outlet 244.

Benefits of the present disclosure include a cooking vessel with a decreased burden of use when compared to a conventional cooking vessel. For example, the most basic of conventional cooking vessels require constant supervision of the conventional cooking vessel and further require the users own cooking expertise to determine if the cooking chamber of the conventional cooking vessel is too hot, too cold, too dry, or too moist. In some conventional cooking vessels, the lid of the cooking vessel includes a liquid reservoir that feeds liquid to the cooking chamber over time. These conventional cooking vessels, however, do not react the actual parameters (e.g., temperature and/or humidity) of the cooking chamber. Instead, these conventional cooking vessels put liquid into the cooking chamber based on preset schedule or at a constant pace. The cooking vessel, as described herein, utilizes the sensor to determine at least one of a temperature, a humidity, or a combination thereof of the cooking chamber. The sensed parameters of the cooking chamber can then be used to automatically control the cooking process by at least one of supply a liquid to the cooking chamber, send an indication or message to a user of the cooking vessel (e.g., to indicate the doneness of the food and/or the need for an additional ingredient), adjust a heat output of the heating element of the cooking appliance, or a combination thereof. This function of the cooking system, through use of the cooking vessel and the sensed parameters of the cooking chamber, in turn allow for a more autonomous cooking experience (e.g., requiring less user intervention) than the cooking experience of the conventional cooking vessel. This, in turn, greatly reduces the burden of cooking with the cooking vessel in comparison with the conventional cooking vessel.

To the extent not already described, the different features and structures of the various aspects can be used in combination with each other as desired. That one feature is not illustrated in all of the aspects is not meant to be construed that it cannot be, but is done for brevity of description. Thus, the various features of the different aspects can be mixed and matched as desired to form new aspects, whether or not the new aspects are expressly described.

This written description uses examples to disclose aspects of the disclosure, including the best mode, and also to enable any person skilled in the art to practice aspects of the disclosure, including making and using any devices or systems and performing any incorporated methods. While aspects of the disclosure have been specifically described in connection with certain specific details thereof, it is to be understood that this is by way of illustration and not of limitation. Reasonable variation and modification are possible within the scope of the forgoing disclosure and drawings without departing from the spirit of the disclosure, which is defined in the appended claims.

Further aspects of the disclosure are provided by the subject matter of the following clauses:

A cooking vessel comprising a cooking body defining a cooking chamber, a lid removably couplable to the cooking body, the lid having a lid body extending between an inner surface confronting the cooking chamber, and an outer surface, the lid body having a centerline axis extending between the inner surface and the outer surface, and a liquid reservoir provided within the lid body, and at least one sensor configured to measure at least one of a humidity or a temperature of the cooking chamber wherein a liquid within the liquid reservoir is selectively supplied to the cooking chamber based on at least one of the measured humidity of temperature of the cooking chamber.

A cooking appliance comprising a cook surface with a heating zone configured to receive a cooking vessel, the cooking vessel comprising a cooking body defining a cooking chamber, a lid removably couplable to the cooking body, the lid having a lid body extending between an inner surface confronting the cooking chamber, and an outer surface, the lid body having a centerline axis extending between the inner surface and the outer surface, and at least one sensor configured to measure at least one of a humidity or a temperature of the cooking chamber, wherein a temperature of the heating zone is configured to be adjusted based on at least one of the humidity, the temperature, or a combination thereof of the cooking chamber.

The cooking vessel of any of the preceding clauses, wherein the lid comprises an actuator configured to selectively supply a liquid within the liquid reservoir to the cooking chamber.

The cooking vessel of any of the preceding clauses, wherein the actuator is an electrovalve.

The cooking vessel of any of the preceding clauses, wherein the lid comprises a plurality of outlets provided along the inner surface and being fluidly coupled to the liquid reservoir.

The cooking vessel of any of the preceding clauses, wherein the lid comprises a distribution cavity formed within the lid body and fluidly coupling the liquid reservoir to the plurality of outlets.

The cooking vessel of any of the preceding clauses, wherein the lid comprises a distribution duct provided within the distribution cavity.

The cooking vessel of any of the preceding clauses, wherein the distribution duct is formed as a singular wall extending circumferentially about the centerline axis.

The cooking vessel of any of the preceding clauses, wherein the plurality of outlets are arranged in a plurality of concentric rows radially spaced with respect to one another, with respect to the centerline axis.

The cooking vessel of any of the preceding clauses, wherein a first outlet of the plurality of outlets includes a first cross-sectional area when viewed along a plane perpendicular to the centerline axis and intersecting the first outlet, and a second outlet of the plurality of outlets includes a second cross-sectional area, larger than the first cross-sectional area, when viewed along a plane perpendicular to the centerline axis and intersecting the second outlet.

The cooking vessel of any of the preceding clauses, wherein the first outlet is provided radially inward from the second outlet.

The cooking vessel of any of the preceding clauses, further comprising a controller module communicatively coupled to the at least one sensor, the controller module configured to receive a signal form the at least one sensor indicative of at least one of the temperature or the humidity of the cooking chamber, and automatically selectively fluidly couple the liquid reservoir to the cooking chamber based on the received signal.

The cooking vessel of any of the preceding clauses, wherein the controller module is configured to communicate at least one of a doneness or a temperature of the cooking chamber to a user of the cooking vessel through a wireless communication.

The cooking vessel of any of the preceding clauses, wherein the controller module is configured to alert a user of the cooking vessel when the measured temperature exceeds a user-defined temperature threshold.

The cooking vessel of any of the preceding clauses, wherein the controller module is provided within the lid body.

The cooking vessel of any of the preceding clauses, wherein the at least one sensor is provided along the lid body.

The cooking vessel of any of the preceding clauses, wherein the lid comprises a power source operably coupled to the at least one sensor.

The cooking vessel of any of the preceding clauses, wherein the at least one sensor comprises both a humidity sensor and a temperature sensor.

The cooking appliance of any preceding clause, wherein the at least one sensor is provided along the lid.

The cooking appliance of any preceding clause, wherein the cooking vessel includes a controller module communicatively coupled to the at least one sensor and the cooking appliance, the controller module being configured to receive a signal from the at least one sensor, the signal being indicative of a temperature of the cooking chamber, and automatically adjust the temperature of the heating zone based on the received signal.

## Claims

1.  A cooking vessel (20, 120, 220) **characterized by**:

    a cooking body (22) defining a cooking chamber (26);
    a lid (24, 124, 224) removably couplable to the cooking body (22), the lid (24, 124, 224) having:

    a lid body (32, 132, 232) extending between an inner surface (28, 128, 228) confronting the cooking chamber (26), and an outer surface (30, 130, 230), the lid body (32, 132, 232) having a centerline axis (76, 176, 276) extending between the inner surface (28, 128, 228) and the outer surface (30, 130, 230); and
    a liquid reservoir (36, 136, 236) provided within the lid body (32, 132, 232); and
    at least one sensor (42, 142, 242) configured to measure at least one of a humidity or a temperature of the cooking chamber (26); wherein a liquid within the liquid reservoir (36, 136, 236) is selectively supplied to the cooking chamber (26) based on at least one of the measured humidity of temperature of the cooking chamber (26).

2.  The cooking vessel (20, 120, 220) of claim 1, **characterized in that** the lid (24, 124, 224) comprises an actuator (38, 138, 238) configured to selectively supply a liquid within the liquid reservoir (36, 136, 236) to the cooking chamber (26).

3.  The cooking vessel (20, 120, 220) of claim 2, **characterized in that** the actuator (38, 138, 238) is an electrovalve.

4.  The cooking vessel (20, 120, 220) of claims 1 or 2, **characterized in that** the lid (24, 124, 224) comprises a plurality of outlets (44, 144, 244) provided along the inner surface (28, 128, 228) and being fluidly coupled to the liquid reservoir (36, 136, 236).

5. The cooking vessel (20, 120, 220) of claim 4, **characterized in that** the lid (24, 124, 224) comprises a distribution cavity (40, 140, 240) formed within the lid body (32, 132, 232) and fluidly coupling the liquid reservoir (36, 136, 236) to the plurality of outlets (44, 144, 244).

6. The cooking vessel (20, 120, 220) of claim 5, **characterized in that** the lid (24, 124, 224) comprises a distribution duct (294) provided within the distribution cavity (240).

7. The cooking vessel (20, 120, 220) of claim 6, **characterized in that** the distribution duct (294) is formed as a singular wall extending circumferentially about the centerline axis (276).

8. The cooking vessel (20, 120, 220) of claim 4, **characterized in that** the plurality of outlets (44, 144, 244) are arranged in a plurality of concentric rows radially spaced with respect to one another, with respect to the centerline axis (176).

9. The cooking vessel (20, 120, 220) of claim 4, **characterized in that**:

   a first outlet of the plurality of outlets (44, 144, 244) includes a first cross-sectional area when viewed along a plane perpendicular to the centerline axis (76, 176, 276) and intersecting the first outlet; and
   a second outlet of the plurality of outlets (44, 144, 244) includes a second cross-sectional area, larger than the first cross-sectional area, when viewed along a plane perpendicular to the centerline axis (76, 176, 276) and intersecting the second outlet.

10. The cooking vessel (20, 120, 220) of claim 9, **characterized in that** the first outlet is provided radially inward from the second outlet.

**FIG. 1**

EP 4 609 761 A1

FIG. 2

FIG. 3

FIG. 4

**FIG. 5**

# EUROPEAN SEARCH REPORT

**Application Number**

EP 25 15 8505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 088 629 A1 (ZHEJIANG SHAOXING SUPOR DOMESTIC ELECTRICAL APPLIANCE CO LTD [CN]) 16 November 2022 (2022-11-16) * paragraph [0027] - paragraph [0049]; figures 1-12 * | 1-10 | INV. A47J27/00 A47J36/06 A47J36/32 |
| X | CN 206 381 064 U (GU DEJIA) 8 August 2017 (2017-08-08) * the whole document * | 1,2 | |
| X | US 2019/374058 A1 (BLOND LAURENT [FR] ET AL) 12 December 2019 (2019-12-12) * paragraph [0036]; figure 1 * | 1 | |
| A | CN 114 052 461 A (FOSHAN SHUNDE MIDEA ELECTRICAL HEATING APPLIANCES MFG CO LTD) 18 February 2022 (2022-02-18) * abstract; figures 1,2 * | 1-10 | |

TECHNICAL FIELDS
SEARCHED        (IPC)

A47J

The present search report has been drawn up for all claims

| Place of search | Date of completion of the search | Examiner |
|---|---|---|
| Munich | 20 June 2025 | Vuc, Arianda |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 8505

20-06-2025

| Patent document cited in search report | | Publication date | Patent family member(s) | | Publication date |
|---|---|---|---|---|---|
| EP 4088629 | A1 | 16-11-2022 | CN | 211632860 U | 09-10-2020 |
| | | | EP | 4088629 A1 | 16-11-2022 |
| | | | WO | 2021139511 A1 | 15-07-2021 |
| CN 206381064 | U | 08-08-2017 | NONE | | |
| US 2019374058 | A1 | 12-12-2019 | AU | 2017380411 A1 | 25-07-2019 |
| | | | CA | 3046739 A1 | 28-06-2018 |
| | | | CN | 108201336 A | 26-06-2018 |
| | | | CN | 209789500 U | 17-12-2019 |
| | | | EP | 3558070 A1 | 30-10-2019 |
| | | | FR | 3060287 A1 | 22-06-2018 |
| | | | JP | 2020501745 A | 23-01-2020 |
| | | | KR | 20190099019 A | 23-08-2019 |
| | | | RU | 2019119467 A | 22-01-2021 |
| | | | US | 2019374058 A1 | 12-12-2019 |
| | | | WO | 2018115697 A1 | 28-06-2018 |
| CN 114052461 | A | 18-02-2022 | NONE | | |